# EUROPÄISCHE PATENTANMELDUNG

(11) **EP 2 450 234 A1**
(43) Veröffentlichungstag der Anmeldung: **09.05.2012**
(21) Anmeldenummer: 11450138.0
(22) Anmeldetag: 08.11.2011
(51) Int. Cl.: B60P 3/41, B60P 7/08, B62D 33/02

(54) **Zurrsystem**

(30) Priorität: 09.11.2010 AT 6862010 U
(71) Anmelder: Penz crane GmbH, 8753 Fohnsdorf/Aichdorf (AT)
(72) Erfinder: Penz, Rochus, 8753 Aichdorf/Fohnsdorf (AT)
(74) Vertreter: Cunow, Gerda

(57) **Zusammenfassung**

Bei einem Zurrsystem umfassend zwei miteinander lösbar verbindbare Spannseil- (7) bzw. Kettenenden (9) sowie wenigstens eine Zurrvorrichtung (3) mit einer Festlegung (22) für ein Spannseil (7) sowie einer Spannvorrichtung zum Spannen des Spannseils, weist die Spannvorrichtung der wenigstens einen Zurrvorrichtung (3) einen in einem Gehäuse gelagerten, durch Hydraulikfluid beaufschlagbaren Hydraulikzylinder (24), wenigstens eine mit dem Hydraulikzylinder (24) verbundene Umlenkrolle (20) für das Spannseil (7) sowie die Festlegung (22) für das Spannseil (7) auf und ein mit dem Hydraulikzylinder (24) der bzw. jeder Zurrvorrichtung (3) verbundenes Aggregat (6, 15) ist eingesetzt.

## Beschreibung

Die vorliegende Erfindung bezieht sich auf ein Zurrsystem umfassend zwei miteinander lösbar verbindbare Spannseil- bzw. Kettenenden sowie wenigstens eine Zurrvorrichtung mit einer Festlegung für ein Spannseil sowie einer Spannvorrichtung zum Spannen des Spannseils.

Zurrsysteme zum Festlegen bzw. Halten von stückigen Ladungen sind in den unterschiedlichsten Varianten bekannt, wobei entweder die Spannseile rund um die Ladung geführt werden und anschließend manuell oder mittels eines Motors durch entsprechende Halteösen bzw. Halteschlaufen geführt werden und entsprechend festgespannt werden oder mittels Ratschen verzurrt werden. Wenn die Ladung in der Folge entweder mittels LKW oder Zug verfahren wird, passiert es relativ häufig, insbesondere wenn die Ladung keine exakt symmetrische Form aufweist, dass aufgrund der Bewegung während des Transports das Ladungsgut sich wenig zusammensetzt, die Spannseile bzw. Spannketten sich während des Transports lockern und somit häufig auch mehrmals nachgespannt werden müssen. Zu diesem Zweck muss das Transportfahrzeug angehalten werden, das Spannseil entweder manuell oder mittels Motor nachgespannt werden und in der Folge der Transport wieder aufgenommen werden. Eine derartiges Nachspannen der Spanngurte bzw. Spannseile von stückigen Ladungen, wie beispielsweise Baumstämmen ist nicht nur zeitaufwendig sondern insbesondere dann gefährlich, wenn auf das Nachspannen der Spanngurte vergessen wird bzw. dieses nicht ausreichend oft ausgeführt wird, so dass die Ladung verrutschen bzw. instabil werden kann, worauf im negativsten Fall ein Ladungsverlust die Folge sein könnte.

Obwohl Motorantriebe für das Festspannen von Ladungen existieren, gibt es bis dato keinerlei hydraulisches Zurrsystem, welches ein selbsttätiges Nachspannen zur Verfügung stellt bzw. gegebenenfalls auch eine Warnung an die Fahrer und das Begleitpersonal abgibt, dass sich die Zurrvorrichtungen, insbesondere das Spannseil bzw. die Spannketten gelockert haben und somit ein Nachspannen erforderlich wird. Es bleibt somit dem Fahrer und der Umsicht des Begleitpersonals überlassen, ob und wie häufig die Ladung nachgespannt wird, so dass diesbezüglich erhebliche Sicherheitsmängel bzw. Gefahrenmomente bestehen.

Die vorliegende Erfindung zielt daher darauf ab ein hydraulisches Zurrsystem zur Verfügung zu stellen, mit welchem es möglich wird, während des Transports in Einzelstücken vorliegende Ladungen, wie Baumstämme, Brennholz oder dgl. so zu sichern, dass während der Fahrt die Spannseile bzw. -ketten vollständig straff gehalten sind, ohne dass es erforderlich wäre, dass Bedienungspersonal während der Fahrt Spannseile bzw. Spannketten nachspannt bzw. neuerlich festlegt.

Zur Lösung dieser Aufgabe ist die vorliegende Erfindung im wesentlichen dadurch gekennzeichnet, dass die Spannvorrichtung der wenigstens einen Zurrvorrichtung einen in einem Gehäuse gelagerten, durch Hydraulikfluid beaufschlagbaren Hydraulikzylinder, wenigstens eine mit dem Hydraulikzylinder verbundene Umlenkrolle für das Spannseil sowie die Festlegung für das Spannseil aufweist und dass ein mit dem Hydraulikzylinder der bzw. jeder Zurrvorrichtung verbundenes Aggregat eingesetzt ist. Indem ein in einem Gehäuse gelagerter, durch Hydraulikfluid beaufschlagbarer Hydraulikzylindern vorgesehen ist, gelingt es die wenigstens eine Zufuhrrichtung mittels des Zylinders so zu betätigen, dass das Spannseil auch während der Fahrt eines Transportfahrzeugs immer gespannt ist, so dass ein Nachspannen des Spannseils bzw. der Spannkette durch Anhalten des Transportfahrzeugs und gesondertes Betätigen einer Zurrvorrichtung während der Fahrt hintangehalten werden kann. Indem weiterhin wenigstens eine mit dem Hydraulikzylinder verbundene Umlenkrolle für das Spannseil vorgesehen ist, sowie eine Festlegung für das Spannseil in dem Gehäuse angeordnet ist, gelingt es mit lediglich einem geringen Hub des Hydraulikzylinders eine Verkürzung der Länge des Seils zu erzielen, welche dem doppelten Hub entspricht, so dass mit einer kleinbauenden Vorrichtung das Auslangen gefunden werden kann, welche sicher und zuverlässig an dem Fahrzeug angebracht werden kann. Indem weiterhin im Inneren des Gehäuses eine Festlegung für das Spannseil vorgesehen ist, ist eine Beschädigung des Spannseils im Inneren des Gehäuses mit Sicherheit hintanzuhalten und überdies ist gewährleistet, dass ein Abrutschen des Spannseils bzw. der -kette von der Umlenkrolle, welche mit dem Hydraulikzylinder zusammenwirkt, verhindert werden kann.

Indem, wie dies einer bevorzugten Weiterbildung der Erfindung entspricht, das Zurrsystem so ausgebildet ist, dass die wenigstens eine Zurrvorrichtung eine weitere Umlenkrolle im Einlaufbereich des Spannseils in das Gehäuse aufweist, wird einerseits gewährleistet, dass im Einlaufbereich des Spannseils in das Gehäuse ein übermäßiges Scheuern und somit ein Verschleiß des Spannseils, beispielsweise an der Gehäusewand, hintangehalten wird und andererseits sichergestellt, dass ein gleichmäßiges und ruckfreies Spannen des Seils ermöglicht ist. Indem weiterhin die weitere Umlenkrolle im Einlaufbereich des Spannseils in das Gehäuse vorgesehen ist, kann darüber hinaus die Zurrvorrichtung in jeder beliebigen Position an dem Transportfahrzeug festgelegt werden. Eine Ausrichtung des Gehäuses in waagrechter oder senkrechter Form bzw. in jedem beliebigen Winkel zu der Fahrzeugoberfläche ist durch eine derartige Ausbildung möglich, so dass den entsprechenden Platzangeboten des Fahrzeugs einfach und zuverlässig Rechnung getragen werden kann.

Gemäß einer bevorzugten Weiterbildung der Erfindung, ist das Zurrsystem so ausgebildet, dass eine Achse der wenigstens einen mit dem Hydraulikzylinder verbundenen Umlenkrolle in je einem beidseitig des Gehäuses ausgebildeten Langloch geführt ist. Indem eine Achse der wenigstens einen mit dem Hydraulikzylinder verbundenen Umlenkrolle in je einem beidseitig des Gehäuses ausgebildeten Langloch geführt ist, wird die Länge des Verschiebewegs des Hydraulikzylinders vorgegeben und gleichzeitig sichergestellt, dass das Spannseil nicht während des Verschiebens des Hydraulikzylinders ruckartig bewegt wird, wodurch es kurzfristig zu einer übermäßigen Belastung des Spannseils kommen könnte, was eine Gefahr des Reißens bzw. Brechens zur Folge hätte. Weiterhin wird durch eine derartige Führung der Umlenkrolle sichergestellt, dass eine gleichmäßige und gleichbleibende Zurrkraft auf das Spannseil ausgeübt wird, so dass auch ein Lockern der Ladung durch ein gegebenenfalls unbeabsichtigtes Nachgeben des Spannseils mit Sicherheit hintangehalten ist.

Indem, wie dies in einer weiters bevorzugten Weiterbildung der Erfindung entspricht, eine Mehrzahl von Zurrvorrichtungen vorgesehen ist, gelingt es, die Ladung, wie beispielsweise Holz, Baumstämme oder dgl. an mehreren Stellen des Transportfahrzeugs gleichmäßig und zuverlässig zu sichern, so dass ein gleichmäßiger Halt der gesamten Ladung zur Verfügung gestellt werden kann. Weiterhin ist es mit einer derartigen Mehrzahl von Zurrvorrichtungen möglich, auch bei Ladungen, welche unterschiedlichen Durchmesser aufweisen, wie dies beispielsweise bei Baumstämmen häufig der Fall ist, gleichmäßig zu sichern. Da Baumstämme durch Ineinanderrollen bzw. -schachteln an verschiedenen Orten des Transportfahrzeugs den Gesamtumfang der Ladung verschieden stark verändern können, ist es bevorzugt eine Mehrzahl von Transportvorrichtungen vorzusehen, wie dies auch im Stand der Technik bis dato meist der Fall war.

Indem, wie dies einer bevorzugten Weiterbildung der vorliegenden Erfindung entspricht, sämtliche Zurrvorrichtungen durch ein einziges Aggregat mit Druck beaufschlagt sind, gelingt es das Zurrsystem insgesamt apparativ einfach auszubilden und gleichzeitig eine zuverlässige Sicherung der Ladung zu gewährleisten. Darüber hinaus kann beispielsweise das gemeinsame Aggregat auch für andere Elemente des Transportfahrzeugs, wie beispielsweise in einen Kran eingesetzt werden, wodurch eine weitere apparative Vereinfachung des Gesamtsystems gelingt.

Um ein Nachspannen der Spannseile bzw. Spannketten während der Fahrt mit Sicherheit hintanzuhalten, ist die vorliegende Erfindung bevorzugt dahingehend weitergebildet, dass das Aggregat während eines Betriebs zu einem dauernden Aufrechterhalten eines vorgegebenen Drucks in den Hydraulikzylinder gesteuert bzw. geregelt ist. Durch Steuern bzw. Regeln des Aggregats zu einem dauerndem Aufrechterhalten eines vorgegebenen Drucks in den Hydraulikzylindern wird eine gleichmäßige und gleichbleibende Spannkraft auf dem Spannseil während des Transports von Holz bzw. Baumstämmen oder anderen stückigen Gütern beibehalten, so dass nicht nur durch das Spannseil jederzeit eine gleichbleibende Zurrkraft aufrecht erhalten ist sondern auch ein Lockern der Ladung mit Sicherheit hintangehalten ist.

Indem, wie dies einer bevorzugten Weiterbildung der Erfindung entspricht, ist in den Hydraulikzylindern ein Druck von 150 bis 220 bar, insbesondere 160 bis 180 bar aufrechterhalten ist, wird eine ausreichend hohe Zugkraft auf das Spannseil aufgebracht damit auch schwere Ladungen, wie beispielsweise Baumstämme mit Sicherheit an einem Verrutschen bzw. einem unbeabsichtigten Bewegen während des Transports gehindert werden, wodurch die Ladung transportiert werden kann, ohne dass es während der Fahrt notwendig wäre anzuhalten und den Ladungszustand, insbesondere die Spannung der Spannseile bzw. -ketten zu überprüfen und nachzuspannen.

Das gleichmäßige Aufrechterhalten der Zugkraft auf die Spannseile wird gemäß einer bevorzugten Weiterbildung der vorliegenden Erfindung dadurch erzielt, dass der (die) Hydraulikzylinder über ein 24 V Hydraulikaggregat mittels Druckschalter mit andauernd gleichbleibenden Druck beaufschlagt ist (sind). Dadurch, dass der Hydraulikzylinder über ein Hydraulikaggregat mittels Druckschalter mit andauern gleichbleibendem Druck beaufschlagt ist, gelingt es, einerseits die Zurrkraft über die Zeit konstant zu halten und somit das bzw. die Spannseile dauernd nachzuspannen und andererseits gelingt es mit einer derartigen Ausführung des Zurrsystems, in einem Transportfahrzeug bereits vorhandene Elemente, wie eine Batterie, ein Hydraulikaggregat und dgl. ohne Änderungen weiterzuverwenden, wodurch das Gesamtsystem apparativ einfach und überdies kostengünstig ausgebildet werden kann. Eine besonders einfache und sichere Variante der erfindungsgemäßen Vorrichtung besteht hierbei darin, dass zusätzlich im Führerhaus des Transportfahrzeugs ein mit Kontrollleuchten versehener Schalter vorgesehen ist, an welchem alleine aus beispielsweise der Farbe des aufleuchtenden Kontrolllichtes direkt abgelesen werden kann, ob der Druckschalter eingeschalten ist oder ob das Aggregat arbeitet, d.h. ob das Spannseil und die Spannketten gerade nachgespannt werden. Aus einem dauernden Aufleuchten des Kontrolllichts, welches das Nachspannen der Ladung anzeigt, kann hierbei z.B. geschlossen werde, dass entweder ein Spannseil gerissen ist oder ein sonstiger Defekt besteht, worauf unmittelbar von dem Begleitpersonal die erforderlichen Schritte unternommen werden können.

Indem, wie dies einer bevorzugten Weiterbildung der Erfindung entspricht, das Zurrsystem so ausgebildet ist, dass sämtliche Zylinder mit einem gemeinsamen Vorratstank für Hydrauliköl verbunden sind, gelingt eine weitere apparative Vereinfachung des Zurrsystems und weiterhin kann beispielsweise auch ein Vorratstank für Hydrauliköl mitverwendet werden, welcher für einen gegebenenfalls vorhandenen Kranausleger und dgl. zum Beladen und Entladen des Transportfahrzeugs eingesetzt wird, so dass auch ein Nachrüsten herkömmlicher Transportfahrzeuge mit der erfindungsgemäßen Vorrichtung ohne großem Aufwand möglich ist.

Um auch bei hohen Beanspruchungen einen sicheren Halt einer Ladung auf einem Transportfahrzeug zu gewährleisten, ist das erfindungsgemäße Zurrsystem bevorzugt so weitergebildet, dass die Zurrvorrichtung(en) unlösbar an einer Ladefläche eines Transportfahrzeugs festgelegt ist (sind). Indem die Mehrzahl von Zurrvorrichtungen unlösbar an der Ladefläche z. B. dem Rumenstock eines Transportfahrzeugs festgelegt sind, wird sichergestellt, dass ein unbeabsichtigtes Lösen der Zurrvorrichtung von dem Transportfahrzeug hintangehalten ist und somit darüber hinaus gewährleistet ist, dass die Zugkraft auf die Spannseile gleichmäßig aufrecht erhalten wird und nicht beispielsweise durch ein Verbiegen der Festlegung der Zurrvorrichtung an dem Transportfahrzeug die Seillänge des Spannseils unbeabsichtigt verlängert wird.

Indem, wie dies einer Weiterbildung der Erfindung entspricht, das Zurrsystem bevorzugt so weitergebildet ist, dass ein Ende des Spannseils bzw. der Kette lösbar an der Ladefläche des Transportfahrzeugs festgelegt ist, kann die Länge des Spannseils bzw. der -kette, mit welcher die Ladung festgelegt wird, variabel eingestellt werden und somit Ladungen verschiedener Größe, insbesondere unterschiedlichen Umfangs sicher und zuverlässig gehalten werden.

Um ein Verrutschen des Spannseils bzw. der -kette mit Sicherheit hintanzuhalten, ist gemäß einer bevorzugten Weiterbildung das Zurrsystem so ausgebildet, dass das Spannseil bzw. die Kette über wenigstens einen Führungshaken geführt ist. Dadurch, dass das Spannseil bzw. die -kette über wenigstens einen Führungshaken geführt ist, wird ein Verrutschen bzw. Ausweichen des Seils, insbesondere im Bereich unter der Ladung mit Sicherheit hintangehalten, so dass die Ladung zuverlässig und gleichbleibend gehalten werden kann und gleichzeitig sichergestellt ist, dass ein immer gleichbleibender Zug durch das Zurrsystem ausgeübt wird, so dass ein Verrutschen der Ladung bzw. ein Lockern der Halterung der Ladung mit Sicherheit hintangehalten ist.

Die Erfindung wird nachfolgend anhand von einem in der Zeichnung dargestellten Ausführungsbeispiel näher erläutert. In diesem zeigen:
Fig. 1 schematisch eine perspektivische Ansicht einer Ladefläche eines Transport-LKWs, auf welchem eine Zurrvorrichtung gemäß der vorliegenden Erfindung festgelegt ist;
Fig. 2 ein Blockdiagramm eines Zurrsystems gemäß der vorliegenden Erfindung;
Fig. 3 eine schematische Seitenansicht einer Zurrvorrichtung gemäß der vorliegenden Erfindung; und
Fig. 4 eine Ansicht von unten der Zurrvorrichtung gemäß Fig. 3.

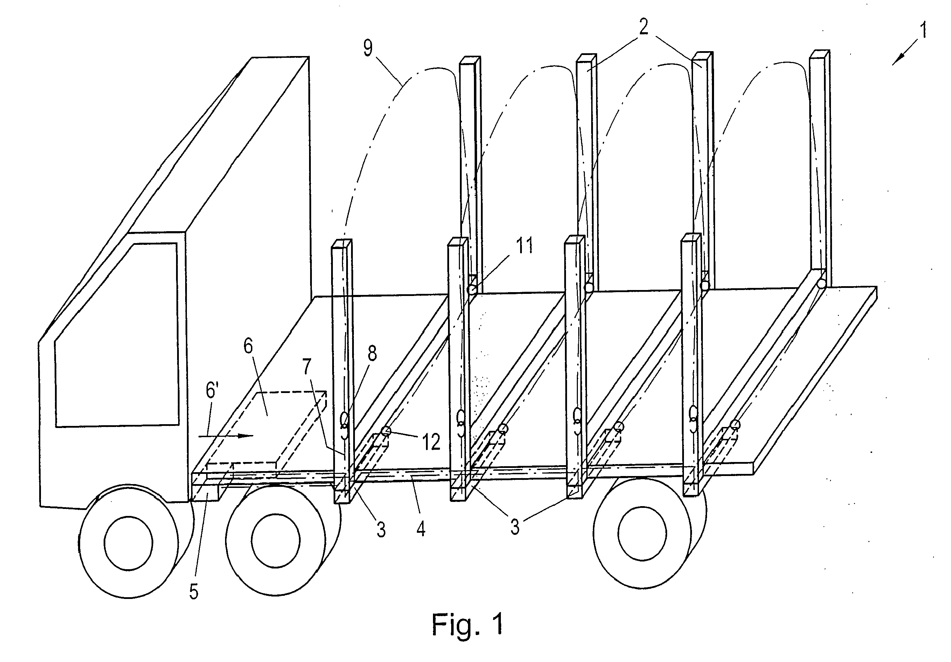

Bei der Darstellung von Fig. 1 ist mit 1 ein schematisch dargestelltes Transportfahrzeug bezeichnet, auf dessen Ladefläche eine Mehrzahl von Langholzauflagevorrichtungen 2 angeordnet ist, an deren zur Fahrzeugunterseite gerichteten Teil insbesondere an der zum Äußeren gerichteten Seite derselben jeweils eine Zurrvorrichtung 3 festgelegt ist, wobei jede Zurrvorrichtung 3 beispielsweise mit der zugehörigen Langholzauflage 2 verschweißt ist.

Schematisch ist jede der Zurrvorrichtungen 3 mit einer mit 4 bezeichneten Hydraulikleitung verbunden bzw. versehen. Die Hydraulikleitung 4 ist an ihrem anderen, von der Zurrvorrichtung abgewandten Ende über eine schematisch mit 5 dargestellte Steuerung bzw. Regelung mit einem nicht näher dargestellten Aggregat 6 verbunden.

Das Aggregat 6 selbst wird über eine schematisch mit 7 bezeichnete Leitung mit Gleichspannung aus der Batterie des Fahrzeugs 1 versorgt, wobei die Batterie in Fig. 1 nicht dargestellt ist.

Aus einer der Zurrvorrichtungen 3 austretend ist ein Spannseil 7 schematisch dargestellt, welches Spannseil 7 über eine schematisch angedeutete Haken- und Ösenverbindung 8 mit einer Spannkette lösbar verbunden ist. Die Spannkette 9 ist ihrerseits über wenigstens einen Haken 11 mit einer lösbaren Festlegung 12, welche wiederum an der Langholzauflagevorrichtung 2, insbesondere dem Rumenstock angelenkt ist, verbunden. Nach Verbindung des Endes der Kette 9 mit jenem des Spannseils 7 und Beaufschlagung des in der Zurrvorrichtung 3 vorgesehenen Zylinders mit Druck wird die Kette 9 über die Zurrvorrichtung 3 festgezogen, so dass das auf dem Transportfahrzeug geladene Langholz sicher und zuverlässig gehalten ist.

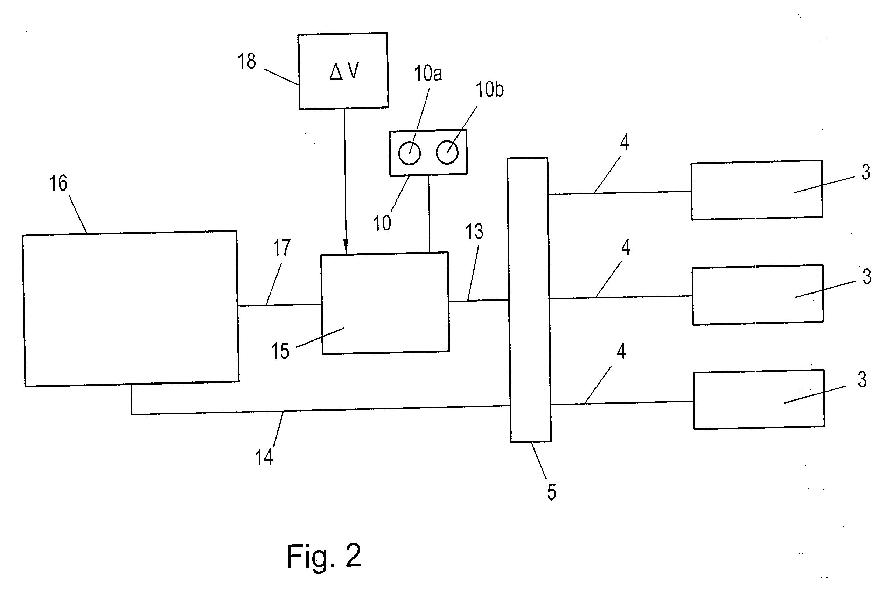

In Fig. 2, in welcher soweit als möglich die Bezugszeichen von Fig. 1 beibehalten sind, ist ein Blockschaltbild eines Zurrsystems gemäß der vorliegenden Erfindung dargestellt. In der Darstellung gemäß Fig. 2 sind die Zurrvorrichtungen 3 über Leitungen 4 mit einer Druckschalt- bzw. -regelvorrichtung 5 verbunden, wobei diese beispielsweise als eine Ventilsteuerung ausgebildet sein kann, über welche der Öldruck in dem in der Zurrvorrichtung 3 vorgesehenen Zylinder gleichmäßig aufrecht erhalten wird.

Das Hydrauliköl wird hiebei der Steuer- bzw. Regelvorrichtung 5 über Leitungen 13 zugeführt bzw. über Leitung 14 direkt zu einem Ölvorratsbehälter 16 rückgeführt. In dem Aggregat 15 wird Öl aus dem Ölvorratsbehälter 16, welches über die Leitung 17 dem Aggregat 15 zugeführt wird, weiter über die entsprechenden Leitungen und die Steuervorrichtung den Zurrvorrichtungen 3 zugeführt bzw. rücklaufendes Öl, insbesondere wenn die in den Zurrvorrichtungen 3 vorgesehenen Zylinder drucklos gemacht werden, über die Leitung 14 dem Ölvorratsbehälter wiederum rückgeführt.

Zu diesem Zweck wird das Aggregat 15 mit Gleichspannung aus einer Batterie 18 gespeist und die Schaltung ist hiebei insbesondere so ausgebildet, dass sie über einen nicht näher dargestellten Druckschalter so gesteuert bzw. geregelt ist, dass die in der Zurrvorrichtung 3 vorgesehnen Hydraulikzylinder mit andauernd gleichbleibendem Druck beaufschlagt sind, so dass eine gleichbleibende, konstante Zurrkraft auf die Spannseile 7 bzw. -ketten 9 von Fig. 1 aufrecht erhalten wird. Zur Überwachung der Vorrichtung ist hierbei in dem Führerhaus des Fahrzeugs 1 ein schematisch dargestellter Schalter 10 vorgesehen, an welchen zwei Kontrollleuchten 10a, und 10b vorgesehen sind. Hierbei ist die Schaltung beispielsweise so ausgebildet, dass die Kontrollleuchte 10a leuchtet, wenn der Druckschalter ordnungsgemäß auf Dauerplus geschaltet ist und die Kontrollleuchte 10b nur während eines Nachspannens oder im Falle eines Defektes aufleuchtet.

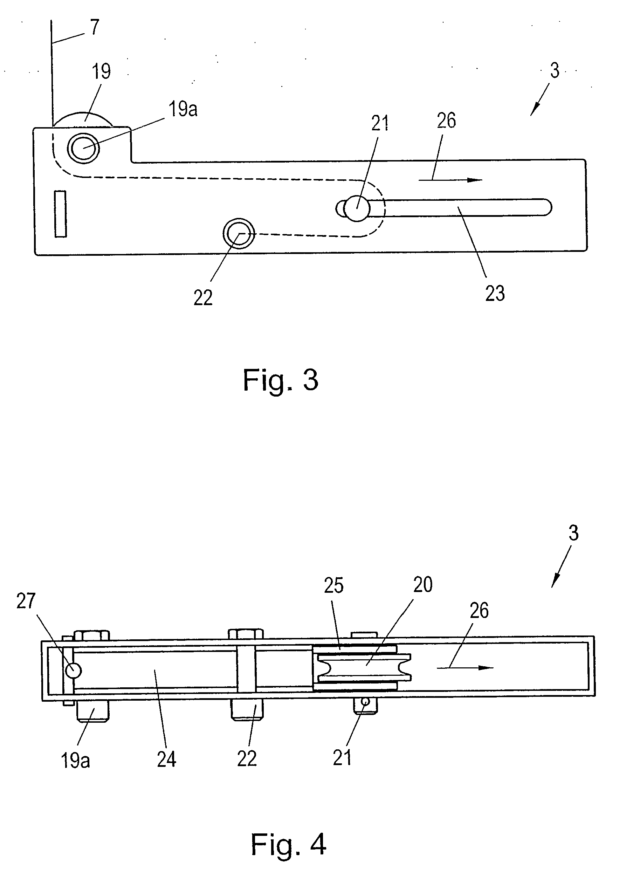

Für das Aufrechterhalten einer gleichbleibenden Spann- bzw. Zurrkraft auf das Spannseil 7 bzw. die -ketten 9 ist die Zurrvorrichtung 3 im Wesentlichen wie in der Seitenansicht der Fig. 3 bzw. in der Ansicht von unten von Fig. 4 dargestellt. Die Zurrvorrichtung 3 weist hiebei eine Einlaufrolle 19 auf, über welche das schematisch dargestellte Spannseil 7 in das Innere der Zurrvorrichtung 3 umgelenkt wird. Das Spannseil 7 im Inneren der Zurrvorrichtung 3 wird so geführt, wie dies strichliert in Fig. 3 dargestellt ist. Insbesondere wird das Spannseil 7 über eine Umlenkrolle 20, von welcher in Fig. 3 lediglich die Achse 21 sichtbar ist, geführt, und in der Folge an einer Festlegung, deren Gewindebuchse in Fig. 3 mit 22 bezeichnet ist, festgelegt. Die Umlenkrolle 20 ist hiebei so gelagert, dass ihre Achse 21 in einem Langloch 23 geführt ist, um eine ungleichmäßige bzw. schiefe Verlagerung der Achse zu der Umlenkrolle 20 im Inneren der Zurrvorrichtung 3 mit Sicherheit hintanzuhalten.

Wenn der in Fig. 4 erkenntliche Hydraulikzylinder 24 mit Druck beaufschlagt wird, wird die über zwei Scheiben 25 an dem Zylinder 24 festgelegte Umlenkrolle 20 in Richtung des Pfeils 26 in dem Langloch 23 verschoben, wodurch das Spannseil 7 insbesondere die außerhalb der Zurrvorrichtung 3 vorliegende, freie Länge des Spannseils 7 verkürzt wird und die Ladung auf dem Transportfahrzeug 1 festgespannt wird. Indem der Hydraulikzylinder 24 im Betrieb so beaufschlagt ist, dass dauerhaft ein gleichbleibender Druck von etwa 150 bis 220 Bar auf dem Zylinder aufrecht erhalten wird, gelingt es während des Transports von stückigen Gütern, insbesondere von Baumstämmen bzw. Langholz, dieses kontinuierlich festzuziehen und dauerhaft eine gleichbleibende Seil- bzw. Kettenspannung aufrecht zu erhalten, so dass ein händisches Nachspannen der Kette bzw. des Spannseils während des Transports nicht erforderlich ist.

Aufgrund des Vorsehens der Umlenkrolle 20 im Inneren der Zurrvorrichtung 3 gelingt es hiebei mit einer relativ kleinbauenden Zurrvorrichtung 3 das Auslangen zu finden, da aufgrund der Umlenkrolle die zweifache Länge des Langlochs 23 als Spannweg für das Festspannen der Ladung während des Transports zur Verfügung steht, wobei sich aus der Erfahrung gezeigt hat, dass üblicherweise eine derartige Länge des Spannwegs ausreichend ist.

Schließlich ist in Fig. 4 mit 27 schematisch die Anlenkung für die Hydraulikölleitung bezeichnet, über welche Anlenkung 27 die Zurrvorrichtung 3 mit dem restlichen Zurrsystem in Verbindung steht und über welche Verbindung 27 der Zylinder 24 mit Öl des vorgegebenen Drucks beaufschlagt wird.

Zur Befestigung der erfindungsgemäßen Zurrvorrichtung 3 am Fahrzeug 1 kann hierbei einfach so vorgegangen werden, dass die Vorrichtung 3 über die Gewindebuchsen 19a und 22 direkt mit dem Rumenstock eines Transportfahrzeugs verschweißt wird.

Es erübrigt sich festzuhalten, dass mit extrem geringem, apparativem Aufwand auch zwei Umlenkrollen im Inneren der Zurrvorrichtung 3 angebracht werden können, wodurch ein noch längerer Spannweg für das Spannseil zur Verfügung gestellt werden kann.

## Patentansprüche

1. Zurrsystem umfassend zwei miteinander lösbar verbindbare Spannseil- (7) bzw. Kettenenden (9) sowie wenigstens eine Zurrvorrichtung (3) mit einer Festlegung (22) für ein Spannseil (7) sowie einer Spannvorrichtung zum Spannen des Spannseils, **dadurch gekennzeichnet, dass** die Spannvorrichtung der wenigstens einen Zurrvorrichtung (3) einen in einem Gehäuse gelagerten, durch Hydraulikfluid beaufschlagbaren Hydraulikzylinder (24), wenigstens eine mit dem Hydraulikzylinder (24) verbundene Umlenkrolle (20) für das Spannseil (7) sowie die Festlegung (22) für das Spannseil (7) aufweist und dass ein mit dem Hydraulikzylinder (24) der bzw. jeder Zurrvorrichtung (3) verbundenes Aggregat (6, 15) eingesetzt ist.

2. Zurrsystem nach Anspruch 1, **dadurch gekennzeichnet, dass** die wenigstens eine Zurrvorrichtung (1) eine weitere Umlenkrolle (19) im Einlaufbereich des Spannseils (7) in das Gehäuse aufweist.

3. Zurrsystem nach Anspruch 1 oder 2, **dadurch gekennzeichnet, dass** eine Achse (21)der wenigstens einen mit dem Hydraulikzylinder (24) verbundenen Umlenkrolle (20) in je einem beidseitig des Gehäuses ausgebildeten Langloch (23) geführt ist.

4. Zurrsystem nach Anspruch 1, 2 oder 3, **dadurch gekennzeichnet, dass** eine Mehrzahl von Zurrvorrichtungen (3) vorgesehen ist.

5. Zurrsystem nach einem der Ansprüche 1 bis 4, **dadurch gekennzeichnet, dass** sämtliche Zurrvorrichtungen (3) durch ein gemeinsames Aggregat (6, 15) mit Druck beaufschlagt sind.

6. Zurrsystem nach einem der Ansprüche 1 bis 5, **dadurch gekennzeichnet, dass** das Aggregat (6, 15) während eines Betriebs zu einem dauernden Aufrechterhalten eines vorgegebenen Drucks in den Hydraulikzylinder (24) gesteuert bzw. geregelt ist.

7. Zurrsystem nach einem der Ansprüche 1 bis 6, **dadurch gekennzeichnet, dass** in den Hydraulikzylindern (24) ein Druck von 150 bis 220 bar, insbesondere 160 bis 180 bar aufrechterhalten ist.

8. Zurrsystem nach einem der Ansprüche 1 bis 7, **dadurch gekennzeichnet, dass** der (die) Hydraulikzylinder (24) über ein 24 V Hydraulikaggregat (6, 15) mittels Druckschalter mit andauernd gleichbleibenden Druck beaufschlagt ist (sind).

9. Zurrsystem nach einem der Ansprüche 1 bis 8, **dadurch gekennzeichnet, dass** sämtliche Zylinder (24) mit einem gemeinsamen Vorratstank (16) für Hydrauliköl verbunden sind.

10. Zurrsystem nach einem der Ansprüche 1 bis 9, **dadurch gekennzeichnet, dass** die Zurrvorrichtung(en) (3) unlösbar an einer Ladefläche eines Transportfahrzeugs (1) festgelegt ist (sind).

11. Zurrsystem nach einem der Ansprüche 1 bis 9, **dadurch gekennzeichnet, dass** ein Ende des Spannseils (7) bzw. der Kette (9) lösbar an der Ladefläche des Transportfahrzeugs (1) festgelegt ist.

12. Zurrsystem nach einem der Ansprüche 1 bis 9, **dadurch gekennzeichnet, dass** das Spannseil (7) bzw. die Kette (9) über wenigstens einen Führungshaken (11) geführt ist.
